# EUROPEAN PATENT APPLICATION

(11) **EP 4 553 490 A1**
(43) Date of publication of application: **14.05.2025**
(21) Application number: 23208133.1
(22) Date of filing: 07.11.2023
(51) Int. Cl.: G01N 21/84, G01N 21/88, G01N 21/90, G06T 7/00, G01N 25/72, G01N 29/00

(54) **FLUCTUATION BASED METHOD FOR DETERMINING SUB-SURFACE DEFECTS OF A SAMPLE**

(71) Applicant: Mitutoyo Corporation, Kawasaki-shi, Kanagawa 213-8533 (JP)
(72) Inventor: MUKUNDAKUMAR, Balasubrahmaniyam, 5627 AC Eindhoven (NL); KUMAR, Nitish, 5508 MP Veldhoven (NL)
(74) Representative: EP&C

(57) **Abstract**

The invention relates to a method for sub-surface defect detection of a sample having a sample surface wherein use is made of an imaging system. The invention further relates to an imaging system for sub-surface defect detection for use in the method of the invention.

The imaging system comprises:
- a sample holder for holding the sample therein;
- an excitation source for exciting the sample in the sample holder;
- an optical sensor for obtaining an image of the sample surface of the sample in the sample holder, wherein the optical sensor comprises multiple pixels; and
- a processor operatively connected to the excitation source and the optical sensor.

## Description

The invention relates to a method for sub-surface defect detection of a sample having a sample surface wherein use is made of an imaging system. The invention further relates to an imaging system for sub-surface defect detection for use in the method of the invention.

A defect of a sample may be a region of the sample having characteristics, such as thermal behaviour or behaviour under stress, that deviate from characteristics of an adjacent region of the sample. In particular, the characteristics of the defect may be undesired or have a negative influence on the characteristics of the sample overall, such as reducing the structural integrity of the sample or resulting in the sample having worse properties, such as optical properties. Defects may extend in multiple directions, such as a having a different structure, or defects may be extend in a single direction, such as a fault line that discontinually separates two regions.

Sub-surface defects are defects present in a sample, which are at least partially below a surface of the sample. Generally, sub-surface defects may not be visible from outside of the sample using normal imaging methods because normal imaging methods are limited by the opaqueness of the sample. As a result, regions having a sub-surface defect appear similar to regions without a sub-surface defect, i.e. background regions, due to a lack in contrast between the regions. This makes sub-surface detection and imaging difficult.

Generating contrast between the background and the defect may be important for Al-based and other algorithms to identify and isolate defects. However often in regular imaging methods generation of contrast relies on the difference in optical properties between the defect and the background. Such changes in optical properties are difficult to observe especially when the defect is subsurface.

A related problem is that resolution of images of sub-surface defect may have a lower resolution due to a diffraction limit of the used imaging system. In other words, even if a known imaging method is capable of imaging sub-surface defects, the extend and/or nature of the sub-surface defect may not be properly resolved by the imaging method, resulting in an inherent uncertainty.

The sample may be manufactured by moulding, e.g. metal cast moulding, or the sample may be manufactured from composite materials such as a carbon fibre reinforced polymer. Detection of sub-surface defects in such samples may be important in monitoring manufacturing quality and process control. In addition, defect detection in the semiconductor industry may also play an important role.

The object of the invention is to provide an improved method for sub-surface defect detection of a sample. In particular, one or more of the above mentioned problems may be alleviated by the invention.

The object of the invention is achieved by the method for sub-surface defect detection of claim 1.

The method for sub-surface defect detection of a sample having a sample surface makes use of an imaging system.

In embodiments, the imaging system comprises a sample holder for holding the sample therein, such that the imaging system may image the sample surface. In embodiments, the sample in the sample holder may be rotatable relative to the optical sensor of the imaging system such that the imaged sample surface is changed, and the sample may be imaged from multiple directions by the imaging system. For example, the sample holder may be in a protected environment, such as a clean room, to protect the sample. The sample holder may reduce vibrations of the sample relative to the imaging system.

In embodiments, the imaging system further comprises an excitation source for exciting the sample in the sample holder. In particular, the excitation source may be configured to excite the sample surface and sample underneath the sample surface such that the relevant portion of the sample is excited by the excitation source. The excitation source may be configured to provided excitation patterns, e.g. randomized excitation patterns, on the sample surface. For example, the excitation source may randomly provide an excitation to various regions of the sample surface. For example, the entire sample surface may be simultaneously excited, e.g. to differing degrees by providing different levels of excitation energy to the sample surface.

In embodiments, the excitation source may comprise a thermal excitation source, such as comprising an infrared thermal source. In embodiments, the excitation source may comprise an excitation source for providing induced acoustics in the sample, such as a speaker or via induced vibrations, e.g. of the sample holder.

The excitation source may further comprise a fluctuation inducer to vary produced excitations by the excitation source. For example, the excitation source may comprise a thermal source which provides a thermal signal, e.g. pulsed infrared radiation, for exciting the sample and the fluctuation inducer may module the thermal signal to provide a, e.g. randomized, excitation pattern on the sample surface.

The imaging system comprises an optical sensor for obtaining an image of the sample surface of the sample in the sample holder. The optical sensor comprises multiple pixels and may comprise optical means for guiding light from the sample in the sample holder to the pixels, e.g. wherein the optical means comprise lenses and/or mirrors. The optical sensor may comprise an infrared camera to obtain a thermal image of the sample surface. The optical sensor may further comprise a camera to obtain an image of the sample. The optical sensor comprises a number of pixels, wherein each pixel has a corresponding pixel value when the optical sensor obtains an image of the sample surface. The optical sensor is configured to obtain images that reflect the effect of the excitation source on the sample.

In embodiments, the imaging system further comprises a light source which produces light that scatters on the sample surface, which scattered light may be detected by the optical sensor, e.g. by a camera thereof. In embodiments, the optical sensor may be synchronized with the excitation source, e.g. a fluctuation inducer thereof, e.g. via the processor of the imaging system, such that an image of the sample surface may be obtained based on an input provided from the excitation source, e.g. an image may be obtained each time a new excitation pattern is provided to the sample surface.

The imaging system may further comprise a processor which is connected to the excitation source and the optical sensor for controlling the excitation source and the optical sensor.

The method comprises exciting the sample by inducing temporal fluctuations in the sample by providing an excitation pattern, e.g. with the excitation source, to the sample surface. The excitation pattern may be a relative simple pattern, for example resulting from pulsed thermal radiation emitted by the excitation source, or the excitation pattern may be more complex, for example having temporally varying intensities over the sample surface or having a fringe pattern. Regions of the sample having different characteristics, e.g. as a result of a sub-surface defect, may react differently to the excitation thereof.

Multiple surface images of the sample surface of the excited sample are obtained with an optical sensor of the imaging system, wherein each surface image is taken at an corresponding image time. For example, n surface images may be taken of the sample surfaces, wherein each surface image is separated from a subsequent surface image by a time dt. As such, the multiple surface images may represent a time series wherein the effect of the excitation source on the sample is reflected. In embodiments, for each pixel of the optical sensor, a time series of the pixel values thereof may be obtained from the multiple surface images by relating the pixel values to the associated image times.

In embodiments, for each pixel of the optical sensor, a time series may be obtained by relating a pixel value of the pixel with the image time of the respective surface image. As such a series is obtained for each pixel of the optical sensor, which series comprises the pixel values of the corresponding pixel. The pixel values may be related to an intensity of a signal measured by the optical sensor. The time series relate a time at which a surface image is obtained, or equivalently a number of the surface image in the multiple surface images, to the pixel values of the pixel at the time. The time series may be represented by a graph having a time or a number of the surface image on one axis and a pixel value on another axis. The time series may be interpolated such that the time series is a continues function. Each time series comprises information on a response of the sample surface to the excitation at a point of the sample surface corresponding to the pixel.

A pixel value distribution is determined for each pixel, for example by counting how many times each pixel value is present in the time series of a given pixel, or by counting pixel values in the surface images. The pixel value distribution provides a distribution of the pixel values of the each pixel. The pixel value distribution may be normalized. The pixel value distribution may reflect a corresponding time series. The pixel value distribution allows to easily compare statistical properties, such as mean and standard deviation, of different time series. In embodiments, cumulants of the time series, for example the first five cumulants, may be directly calculated. For example, the pixel value distribution may be an intensity distribution for the corresponding pixel.

Cumulants of a distribution are a set of quantities that characterize the distribution. A given distribution has a number of nonzero cumulants, which are ordered by the corresponding cumulant order thereof, depending on the distribution.

The method further comprises comparing cumulants of the pixel value distributions to a predetermined selection criterion. The cumulants that are compared to the selection criterion may all have the same cumulant order, so the cumulant values, e.g. the spread thereof, at the given order are compared to the criterion, e.g. which may be a signal to noise ratio or a desired minimal value spread. The cumulants that are compared to the selection criterion may have two or more cumulants. For example, all cumulants of a first order and all cumulants of a second order may be compared to the selection criterion. For example, when comparing cumulants of multiple order, the selection criterion may be relative to the multiple cumulant orders. For example, a cumulant order may be selected for cumulants that satisfy the selection criterion best, e.g. have the widest spread, i.e. biggest difference between minimal and maximal value of the cumulant of a given order, of that do not satisfy the selection criterion worst, e.g. not having the smallest spread.

In embodiments, the cumulants may be compared based on the time series or via the pixel value distributions. Since each time series and/or pixel value distribution has a corresponding cumulant at a given order, there are multiple, i.e. as many as there are pixels, first cumulants. Similarly, there are multiple second cumulants. The first cumulants may be compared to the second cumulants. The cumulants may be compared by directly calculating a value thereof. The cumulants may also be compared by comparing a shape of the time series and/or pixel value distributions and relating the shape to the cumulants. For example, a width of the pixel value distribution is related to the second order cumulant, a symmetry of the pixel value distribution is related to the third order cumulant and a number of peaks of the pixel value distribution is related to higher order cumulants. In other words, the first cumulants may be compared numerically to the second cumulants or indirectly, e.g. using a shape of the pixel value distributions. The selection criterion may be cumulants of a given order having a desired value spread, or it may be cumulants of a first order having a bigger value spread than cumulants of a second order.

The method comprises selecting a cumulant order of cumulants satisfying the predetermined selection criterion. For example, a cumulant order may be selected of a cumulant having a desired value spread, e.g. based on a signal to noise ratio. For example, one of a first cumulants and second cumulants may be selected, wherein the selected cumulant satisfies the predetermined selection criterion. In other words, either the first cumulants are selected or the second cumulants are selected, depending on which of the selected cumulants satisfy the predetermined selection criterion, e.g. satisfies the selection criterion best. For example, the predetermined selection criterion may be which of the first and second cumulants has a wider numerical spread, e.g. a greater separation between a maximal value and a minimal value thereof. The predetermined selection criterion may also be which of the first and second cumulants has a higher mean value. The predetermined selection criterion may be related to a distribution characteristic of the first cumulants and the second cumulants.

For example, when using the pixel value distributions, the pixel value distributions may all have a similar mean, which corresponds to the first order cumulant, but varying variance, which corresponds to the second order cumulant. Based on a comparison of the pixel value distributions, the second order cumulant may be determined as the cumulant satisfying the predetermined selection criterion. The predetermined selection criterion may be a statistical property of the pixel value distributions where the pixel value distributions significantly differ from each other. For example, a statistical difference between the pixel value distributions which may be attributed to system errors or random change may not be considered a for determining the cumulant order of the invention.

For example, the value measure spread of the cumulants may correspond to a difference between the values thereof, e.g. the most difference between the cumulant values thereof. In other embodiments, the cumulant order may be determined for a statistical difference for which the cumulants show more spread than at least two other cumulants of the distributions. In embodiments, the cumulant is chosen such that a contrast of the resulting cumulant map is maximized, e.g. a difference between a maximal cumulant value and a minimal cumulant value is maximal.

In embodiments, pixel value distributions may be compared by calculating for each pixel value distribution a number of cumulants directly, or the pixel value distributions may be comparing the values, or graphs, thereof, e.g. using an Al, to determine a difference between the pixel value distribution which reflects the statistical difference.

After selecting the cumulant order, a cumulant map is determined of the sample surface by mapping for each pixel the cumulant value of the associated pixel value distribution having the selected cumulant order thereto. For example, the cumulants having the selected order may be calculated for each pixel, thus associating each pixel with the cumulant. This allows to determine a cumulant map of the sample surface by mapping for each pixel the selected cumulant thereon. For example, the cumulant map may be an image wherein each value of the cumulant is given a color, for example darker colors for higher cumulant values. A sub-surface defect map may be determined based on the cumulant map.

Since the selected cumulant reflects the statistical property of the time series where they statistically differ from each other and since the time series correspond to how the sample responds to the excitations, the so-obtained cumulant map represents a map of how the sample reacts to the excitations. Areas showing a different cumulant value may then be related to areas having a sub-surface defect. It was found that this approach in determining sub-surface defects allows for improved determination of the sub-surface defects, and may have an increased contrast compared to other known methods.

In embodiments, the comparing cumulants of the pixel value distribution to a predetermined selection criterion comprises comparing a value spread measure, e.g. a contrast or signal to noise ratio, of cumulants having a particular order to a predetermined desired value. This allows the contrast of the resulting cumulant map to be greater than the predetermined desired value, e.g. a predetermined signal to noise ratio or contrast, and thus may allow sub surface defects to be more visible.

In embodiments, the comparing cumulants of the pixel value distribution to a predetermined selection criterion comprises comparing a value spread measure of cumulants of a particular cumulant order to a value spread measure of cumulants of a different cumulant order and wherein selecting a cumulant order of cumulants satisfying the predetermined selection criterion comprises selecting one of the particular cumulant order and different cumulant order corresponding to one of the cumulants having a greater value spread measure compared to the other one of the cumulants. In embodiments, a cumulant is only selected if the value spread thereof is bigger than the predetermined desired value and another cumulant exists that has a smaller value spread.

In embodiments, the comparing of the first cumulants to the second cumulants comprises comparing a shape of the pixel value distributions. For example, a width of the pixel value distributions may be related to the second order cumulant and a symmetry of the pixel value distribution may be related to the third order cumulant. first or second cumulant. For example, if the first cumulant corresponds to the second order cumulants and the second cumulants correspond to the third order cumulant, and it is found that the pixel value distributions are mostly symmetrical, but there is difference in the width of the different pixel value distributions, than the first cumulant may be selected.

In embodiments, the method further comprises:
- obtaining a time series for each pixel of the optical sensor by relating a pixel value of the corresponding pixel with the corresponding image time,
wherein the pixel value distributions are determined based on the respective time series.

In embodiments, the imaging system comprises:
- a sample holder for holding the sample therein;
- an excitation source for exciting the sample in the sample holder;
- the optical sensor for obtaining an image of the sample surface of the sample in the sample holder, wherein the optical sensor comprises multiple pixels and optical means for guiding light from the sample in the sample holder to the pixels, e.g. wherein the optical means comprise lenses and/or mirrors; and
- a processor operatively connected to the excitation source and the optical sensor.

In embodiments, the comparing of the cumulants of the pixel value distributions to a predetermined selection criterion comprises comparing a shape of the pixel value distributions. It was found that is not necessary to calculate the cumulants explicitly. The cumulants may be compared to the selection criterion by comparing the shape of the pixel value distribution.

In embodiments, the method further comprises:
- obtaining one of the multiple surface images while inducing the temporal fluctuations in the sample by providing the excitation pattern to the sample surface;
- obtaining another one of the multiple surface images after removing the excitation pattern from the sample surface; and
- repeating the above steps for different excitation patterns to obtain the multiple surface images.

The another one of the multiple surface images obtained after removing the excitation pattern from the sample may be a background surface image relative to the surface image obtained while inducing the temporal fluctuations. Thus the background surface image comprises information related to a background, such as surface features of the sample. By obtaining a surface image while inducing the temporal fluctuations in the sample with the excitation pattern and another surface image, e.g. the background surface image, after removing the excitation pattern, the background may be compensated. In these embodiments, pairs of surface images are obtained, wherein for each pair of surface images the pixel value distributions may be determined. While selecting the cumulant a difference between the distributions of the surface image with fluctuations and of the corresponding background image may be used. This may increase contrast of the cumulant map and a related sub-surface defect map.

In embodiments, the sample is excited using thermal excitations, e.g. wherein the excitation source is an infrared or heating source. For example, pulsed infrared radiation may be used to excite the sample surface. The intensity of the thermal excitations, and generally of the used excitation pattern, may depend on sample properties, such as material and thickness.

In embodiments, the sample is excited using acoustic excitations, e.g. wherein the excitation source is an acoustic source. Possibly the sample may be excited using both thermal and acoustic excitations simultaneously, or subsequently, for example to obtain two different cumulant maps. Which type of excitation is used may depend on sample properties such as material and thickness of the sample.

In embodiments, the optical sensor comprises an infrared and/or visible light camera. The type of optical sensor of the imaging system may depend on the type of excitation source used. In possible embodiments, either or both of the excitation source and optical sensor may be interchangeable with another embodiment thereof, e.g. depending on sample properties. In embodiments of the imaging system, the imaging system comprises multiple types of excitation sources and optical sensors.

In embodiments, the excitation pattern is a randomized excitation pattern and the temporal fluctuations are uncorrelated temporal fluctuations. By randomizing the excitation pattern, the obtained pixel value distributions may not comprise statistical information relating to the excitation patterns used. For example, in contrast by using highly correlated excitation patterns, the correlation between the patterns may be reflected in the pixel value distributions.

In embodiments, the method comprises determining a 3-dimenionsal cumulant map of the sample by rotating the sample relative to the optical sensor. For example, the sample holder may be rotatable relative to the optical sensor and/or excitation source. By obtaining multiple 2-dimensional images of multiple sample surfaces of the sample, and processing these 2-dimensional images, a 3-dimensional cumulant map of the sample may be obtained, which may then be used to determine a 3-dimensional sub-surface defect map and/or which may be used to determine an extend and a 3-dimensional location of a sub-surface defect in the sample.

In embodiments a defect map, e.g. a sub-surface defect map, of the sample is obtained based on the cumulant map by correlating deviating cumulant values of the cumulant map to defects.

In embodiments, the method comprises classifying defects of the sample based on the cumulant map, e.g. classifying the defects as surface defects or sub-surface defects. In embodiments, a different method may be used to determine surface defects of the sample, which surface defects may then be removed from a defect map of the sample, such that only sub-surface defects remain.

In embodiments, the determined cumulant order corresponds to the cumulant having the widest value spread for the pixel value distributions. The cumulant having the widest value spread is the cumulant having the largest difference between the lowest cumulant value and the highest cumulant value.

The invention further relates to an imaging system for sub-surface defect detection of a sample having a sample surface comprising:
- a sample holder for holding the sample therein;
- an excitation source for exciting the sample in the sample holder;
- the optical sensor for obtaining an image of the sample surface of the sample in the sample holder, wherein the optical sensor comprises multiple pixels and optical means for guiding light from the sample in the sample holder to the pixels, e.g. wherein the optical means comprise lenses and/or mirrors; and
- a processor operatively connected to the excitation source and the optical sensor,
wherein the processor is configured to perform the method according to the invention. In particular, the processor may be configured to control the excitation source to excite the sample and to control the optical sensor to obtain the multiple images of the sample surface. The processor may further be configured to obtain the time series, determine the pixel value distributions, compare the pixel value distributions, and to determine the cumulant map. The processor may further be configured to output the cumulant map, e.g. as a computer file or image, or to relate the cumulant map to a defect map of the sample, which defect map may then be output.

In embodiments of the imaging system, the processor is configured to:
- excite the sample by inducing temporal fluctuations in the sample by providing an excitation pattern to the sample surface;
- obtain multiple surface images of the sample surface with an optical sensor comprising multiple pixels, wherein each surface image is taken at an associated image time;
- determine, for each pixel, a pixel value distribution of pixel values by relating pixel values of the respective pixel to an occurrence number thereof;
- compare cumulants of the pixel value distributions to a predetermined selection criterion;
- select a cumulant order of cumulants satisfying the predetermined selection criterion; and
- determine a cumulant map of the sample surface by mapping for each pixel the cumulant of the associated pixel value distribution having the selected cumulant order thereto.

The invention further relates to a computer program which when loaded on a processor of an imaging system according to the invention, causes the imaging system to perform the method according to the invention.

The invention further relates to a memory disk, e.g. a hard drive, comprising the computer program which when loaded on a processor of an imaging system according to the invention, causes the imaging system to perform the method according to the invention.

Embodiments of the invention will now be described, by way of example only, with reference to the accompanying drawing in which corresponding reference symbols indicate corresponding parts, and in which:
- Fig. 1 depicts an imaging system for sub-surface defect detection; and
- Fig. 2 depicts a flow chart for a method of sub-surface defect detection.

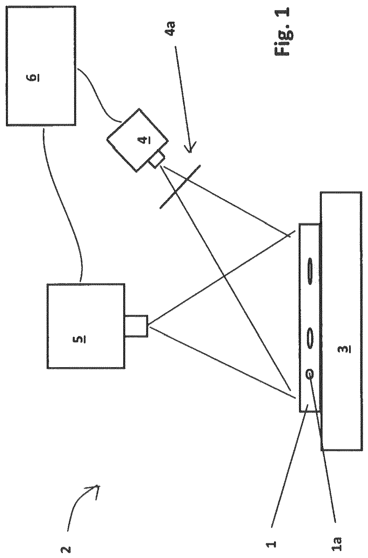

Figure 1 schematically depicts an imaging system 2 for sub-surface defect 1a detection in a sample 1 having a sample surface. Figure 1 depicts a sample 1 having multiple sub-surface defects 1a, wherein the sample is held in a sample holder 3 of the imaging system 2.

The sample holder 3 is configured to hold the sample 1 such that the embodiment of the sample holder 3 may depend on the sample 1 for which sub-surface defects 1a are to be detected. For example, the sample holder 3 may be configured to maintain a protective environment, e.g. having a certain number of dust particles, for specific samples. In figure 1, the sample 1 is provided on top of the sample holder 3. In embodiments, the sample holder 3 may hold the sample 1 in place, e.g. using clamps.

The imaging system 2 further comprises an excitation source 4 for exciting the sample 1 in the sample holder 3. The excitation source 4 is operatively connected to a processor 6 of the imaging system 2.

The excitation source 4 may be a thermal excitation source, such as an infrared radiation source 4. The excitation source is configured to provide an excitation pattern to the sample 1, wherein the excitation pattern may provide different excitation levels to different areas of the sample surface.

The excitation source 4 may comprise a fluctuation inducer 4a for inducing fluctuations in the excitation pattern, or for inducing the excitation pattern, that lead to the temporal fluctuations in the sample 1. The fluctuation inducer 4a may be embodied as a modulator provided in a radiation path of a radiation source of the excitation source 4.

The imaging system 2 further comprises an optical sensor 5 for obtaining an image of the sample surface of the sample 1 in the sample holder 3. The optical sensor is operatively connected to the processor 6 of the imaging system 2. The optical sensor 5 may comprise an infrared camera to obtain a thermal image of the sample surface. The optical sensor 5 may further comprise a camera to obtain an acoustic image of the sample 1. The optical sensor 5 comprises a number of pixels, wherein each pixel has a corresponding pixel value when the optical sensor 5 obtains an image of the sample surface. The optical sensor 5 is configured to obtain images that reflect the effect of the excitation source on the sample 1.

In embodiments, the imaging system 2 further comprises a light source to illuminate the sample surface, In embodiments, the optical sensor 5 may be synchronized with the excitation source 4, e.g. a fluctuation inducer thereof, e.g. via the processor 6 of the imaging system 2, such that an image of the sample surface may be obtained based on an input provided from the excitation source 4, e.g. an image may be obtained each time a new excitation pattern is provided to the sample surface.

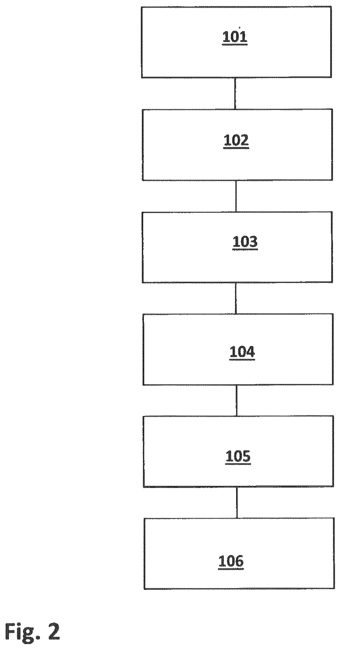

Figure 2 depicts a flow chart for the method for sub-surface defect 1a detection and/or for a computer program provided on the processor 6.

The method comprises exciting the sample 101 by inducing temporal fluctuations in the sample 1 by providing an excitation pattern, e.g. with the excitation source 4, to the sample surface. The excitation pattern may be a relative simple pattern, for example resulting from pulsed thermal radiation emitted by the excitation source 4, or the excitation pattern may be more complex, for example having temporally varying intensities over the sample surface. Regions of the sample 1 having different characteristics, e.g. as a result of a sub-surface defect, may react differently to the excitation thereof.

The method further comprises obtaining 102 surface images of the sample surface with the optical sensor 5, wherein each surface image is taken at an associated image time. In embodiments, a surface image is taken while the sample 1 is begin excited and a subsequent surface image, e.g. a background surface image, is taken after switching off the excitation source 4. The sample 1 may then be excited with a new excitation pattern and a new surface image may be taken while the sample is excited, and so on.

For each pixel of the optical sensor 4 a time series may be obtained 103 by relating a pixel value of the pixel with the image time of the corresponding surface image. The time series comprises the pixel values of the corresponding pixel. The pixel values may be related to an intensity of a signal measured by the optical sensor 4. The time series relate a time at which a surface image is obtained, or equivalently a number of the surface image in the multiple surface images, to the pixel values of the pixel at the time.

For each pixel a pixel value distribution is determined 104 by relating pixel values of the respective pixel to an occurrence number thereof, for example by counting how many times each pixel value is present in the time series. The pixel value distribution provides a distribution of the pixel values of the each pixel. The pixel value distribution may allow to compare statistical properties, such as mean and standard deviation, of different time series.

The method further comprises comparing 105 cumulants of the pixel value distributions to a predetermined selection criterion. For example, the cumulants maybe compared based on the time series or via the pixel value distributions.

A cumulant order of cumulant satisfying the predetermined selection criterion is selected. After selecting cumulant, a cumulant map of the sample surface is determined 106 by mapping each pixel the cumulant value of the associated pixel value distribution having the selected cumulant order thereto. For example, the cumulant map may be an image wherein each value of the cumulant is given a color, for example darker colors for higher cumulant values. A sub-surface defect map may be determined based on the cumulant map.

## Claims

1. Method for sub-surface defect detection in a sample having a sample surface wherein use is made of an imaging system, and wherein the method comprises:
- exciting the sample by inducing temporal fluctuations in the sample by providing an excitation pattern to the sample surface;
- obtaining multiple surface images of the sample surface with an optical sensor of the imaging system comprising multiple pixels, wherein each surface image is taken at an associated image time;
- determining, for each pixel, a pixel value distribution of pixel values by relating pixel values of the respective pixel to an occurrence number thereof;
- comparing cumulants of the pixel value distributions to a predetermined selection criterion;
- selecting a cumulant order of cumulants satisfying the predetermined selection criterion; and
- determining a cumulant map of the sample surface by mapping for each pixel the cumulant value of the associated pixel value distribution having the selected cumulant order thereto.

2. Method according to claim 1, wherein comparing cumulants of the pixel value distribution to a predetermined selection criterion comprises comparing a value spread measure, e.g. a contrast or signal to noise ratio, of cumulants having a particular order to a predetermined desired value.

3. Method according to one or more of the preceding claims, wherein comparing cumulants of the pixel value distribution to a predetermined selection criterion comprises comparing a value spread measure of cumulants of a particular cumulant order to a value spread measure of cumulants of a different cumulant order and wherein selecting a cumulant order of cumulants satisfying the predetermined selection criterion comprises selecting one of the particular cumulant order and different cumulant order corresponding to one of the cumulants having a greater value spread measure compared to the other one of the cumulants.

4. Method according to one or more of the preceding claims, wherein the method further comprises:
- obtaining a time series for each pixel of the optical sensor by relating a pixel value of the corresponding pixel with the corresponding image time,
wherein the pixel value distributions are determined based on the respective time series.

5. Method according to one or more of the preceding claims, wherein the imaging system comprises:
- a sample holder for holding the sample therein;
- an excitation source for exciting the sample in the sample holder;
- the optical sensor for obtaining an image of the sample surface of the sample in the sample holder, wherein the optical sensor comprises multiple pixels and optical means for guiding light from the sample in the sample holder to the pixels, e.g. wherein the optical means comprise lenses and/or mirrors; and
- a processor operatively connected to the excitation source and the optical sensor.

6. Method according to one or more of the preceding claims, wherein the comparing of the cumulants of the pixel value distributions to a predetermined selection criterion comprises comparing a shape of the pixel value distributions.

7. Method according to one or more of the preceding claims, wherein the method further comprises:
- obtaining one of the multiple surface images while inducing the temporal fluctuations in the sample by providing the excitation pattern to the sample surface;
- obtaining another one of the multiple surface images after removing the excitation pattern from the sample surface; and
- repeating the above steps for different excitation patterns to obtain the multiple surface images.

8. Method according to one or more of the preceding claims, wherein the sample is excited using thermal excitations, e.g. wherein the excitation source is an infrared or heating source.

9. Method according to one or more of the preceding claims, wherein the sample is excited using acoustic excitations, e.g. wherein the excitation source is an acoustic source.

10. Method according to one or more of the preceding claims, wherein the optical sensor comprises an infrared and/or visible light camera.

11. Method according to one or more of the preceding claims, wherein the excitation pattern is a randomized excitation pattern.

12. Method according to one or more of the preceding claims, wherein the method comprises determining a 3-dimensional cumulant map of the sample by rotating the sample relative to the optical sensor.

13. Method according to one or more of the preceding claims, wherein a defect map of the sample is obtained based on the cumulant map by correlating deviating cumulant values to defects.

14. Method according to one or more of the preceding claims, wherein comparing cumulants of the pixel value distributions to the predetermined selection criterion comprises calculating cumulants.

15. Method according to one or more of the preceding claims, wherein the method comprises classifying defects of the sample based on the cumulant map, e.g. classifying the defects as surface defects or sub-surface defects.

16. Imaging system for sub-surface defect detection of a sample having a sample surface comprising:
- a sample holder for holding the sample therein;
- an excitation source for exciting the sample in the sample holder;
- the optical sensor for obtaining an image of the sample surface of the sample in the sample holder, wherein the optical sensor comprises multiple pixels and optical means for guiding light from the sample in the sample holder to the pixels, e.g. wherein the optical means comprise lenses and/or mirrors; and
- a processor operatively connected to the excitation source and the optical sensor,
wherein the processor is configured to perform the method according to one or more of the claims 1 - 15.

17. System according to claim 65, wherein the processor is configured to:
- excite the sample by inducing temporal fluctuations in the sample by providing an excitation pattern to the sample surface;
- obtain multiple surface images of the sample surface with an optical sensor comprising multiple pixels, wherein each surface image is taken at an associated image time;
- determine, for each pixel, a pixel value distribution of pixel values by relating pixel values of the respective pixel to an occurrence number thereof;
- compare cumulants of the pixel value distributions to a predetermined selection criterion;
- select a cumulant order of cumulants satisfying the predetermined selection criterion; and
- determine a cumulant map of the sample surface by mapping for each pixel the cumulant of the associated pixel value distribution having the selected cumulant order thereto.

18. Computer program which when loaded on a processor of an imaging system according to one or more of the claims 16 - 17, causes the imaging system to perform the method according to one or more of the claims 1-15.

19. Memory device comprising the computer program according to claim 18.
